(19) Europäisches Patentamt
European Patent Office
Office européen des brevets

(11) **EP 0 669 747 B1**

(12) **EUROPÄISCHE PATENTSCHRIFT**

(45) Veröffentlichungstag und Bekanntmachung des Hinweises auf die Patenterteilung:
**07.05.2003 Patentblatt 2003/19**

(51) Int Cl.$^7$: **H04M 3/22**

(21) Anmeldenummer: **95102013.0**

(22) Anmeldetag: **14.02.1995**

(54) **Integrierbare Schaltungsanordnung zur störsicheren Abhebeerkennung bei Fernsprecheinrichtungen**

Integratable circuit arrangement for disturbance free off-hook detection in telephone systems

Dispositif de circuit intégrable pour une détection de combiné décroché résistante aux perturbations dans des systèmes téléphoniques

(84) Benannte Vertragsstaaten:
**AT DE FR GB IT**

(30) Priorität: **24.02.1994 DE 4406044**

(43) Veröffentlichungstag der Anmeldung:
**30.08.1995 Patentblatt 1995/35**

(73) Patentinhaber: **Infineon Technologies AG
81669 München (DE)**

(72) Erfinder: **Astegher, Berthold, Dipl.-Ing.
A-9020 Klagenfurt (AT)**

(74) Vertreter: **Reinhard - Skuhra - Weise & Partner
Postfach 44 01 51
80750 München (DE)**

(56) Entgegenhaltungen:
**US-A- 4 158 109          US-A- 4 742 536**

**Beschreibung**

Die Erfindung betrifft eine integrierbare Schaltungsanordnung zur störsicheren Abhebeerkennung bei Fernsprecheinrichtungen gemäß dem Oberbegriff des Anspruchs 1, wie aus der US-A-4,158,109 bekannt.

Zur Verlustleistungsreduzierung im Ruhezustand der Fernsprechleitung wird die in Hochvolttechnologie integrierte Leitungstreiberschaltung abgeschaltet. Die Funktion der Abhebeerkennung muß daher von der Niedervoltschaltung übernommen werden. Dazu wird die auf der ab-Leitung anliegende Batteriespannung bewertet. Durch zur Fernsprechleitung parallele Wechselspannungsleitungen (z.B. 50 Hz Netzleitungen) werden auf die Fernsprechleitungen Störspannungen eingekoppelt, die die Höhe der Batteriespannung übersteigen können. Diese Störeinkopplung machen eine herkömmliche Abhebeerekennungsschaltung störanfällig.

Aufgabe der vorliegenden Erfindung ist es eine Schaltungsanordnung zur störsicheren Abhebeerkennung anzugeben. Eine weitere Aufgabe der vorliegenden Erfindung ist es, eine Schaltungsanordnung zur störsicheren Abhebeerkennung anzugeben, die integrierbar ist.

Diese Aufgabe wird durch den Gegenstand des Anspruchs 1 gelöst. Weiterbildungen sind Kennzeichen der Unteransprüche.

Die Erfindung wird nachfolgend anhand zweier Figuren näher erläutert. Es zeigen

Figur 1  ein prinzipielles Schaltbild der erfindungsgemäßen Schaltungsanordnung,

Figur 2  einen zeitlichen Verlauf verschiedener Signale innerhalb der in Figur 1 gezeigten Schaltungsanordnung.

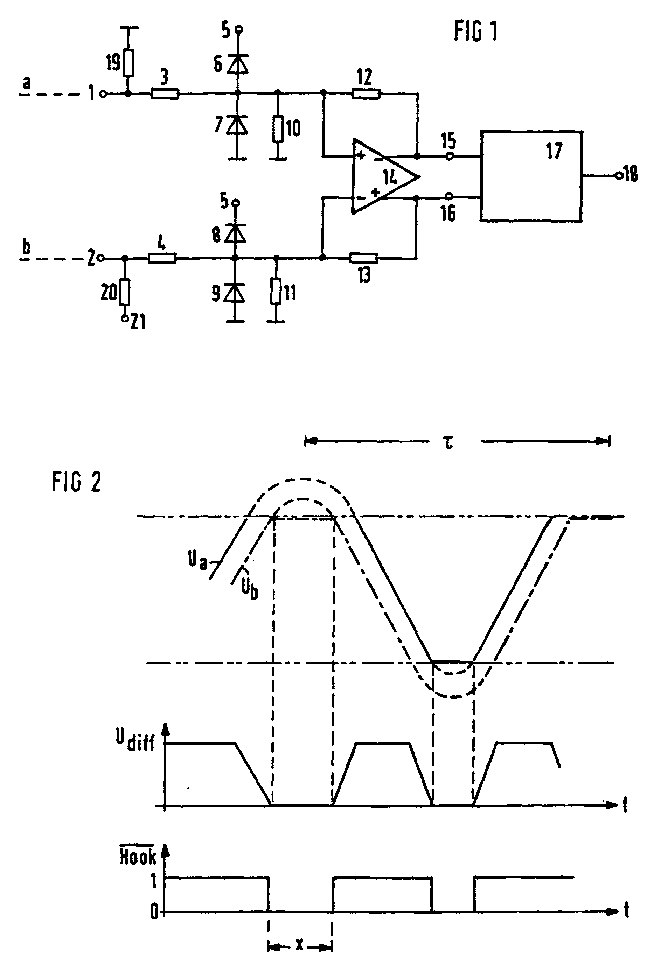

In Figur 1 ist punktiert eine ab-Leitung dargestellt, die über Anschlußklemmen 1, 2 jeweils mit einem Widerstand 3, 4 verbunden ist. Dieser Widerstand ist als Poly-Hochohmwiderstand, z.B. über Dickoxid, ausgebildet. Ein derartiger Hochohmwiderstand kann z.B. eine Spannungsfestigkeit von ca. 500 V haben. Dies ist notwendig, da die Schaltungsanordnung direkt mit einer Fernsprechleitung a, b verbindbar sein soll. Anschlußklemme 1 ist über einen Widerstand 19 mit Masse und Anschlußklemme 2 über einen Widerstand 20 mit einer Anschlußklemme 21 verbunden, an der die negative Versorgungsspannung -$U_{BATT}$ anliegt. Der Hochohmwiderstand 3 ist über eine in Durchlaßrichtung geschaltete Diode 6 mit einer Versorgungsspannungsklemme 5 verbunden. Des weiteren ist er über eine in Sperrichtung geschaltete Diode 7 mit Masse verschaltet. Ebenso ist der Hochohmwiderstand 4 über eine in Durchlaßrichtung geschaltete Diode 8 mit einer Versorgungsspannungsklemme 5 und über eine in Sperrichtung geschaltete Diode 9 mit Masse verschaltet.

Parallel zur Diode 7 und zur Diode 9 ist jeweils ein Widerstand 10 bzw. 11 geschaltet. Die Anschlußklemme 1 ist des weiteren über den Hochohmwiderstand mit dem positiven Eingang eines Operationsverstärkers 14 verschaltet. Der negative Eingang des Differenzverstärkers 14 ist über den Hochohmwiderstand 4 mit der Eingangsklemme 2 verbunden. Der negative Ausgang des Differenzverstärkers 14 ist über einen Widerstand 12 mit dem positiven Eingang gekoppelt. Der positive Ausgang des Differenzverstärkers 14 ist über einen Widerstand 13 mit dem negativen Eingang gekoppelt. Ausgangsklemmen 15 und 16 sind vorgesehen, an denen das differenzielle Ausgangssignal des Differenzverstärkers 14 abgegriffen werden kann. An diesen Ausgangsklemmen 15 und 16 ist eine Auswerteschaltung 17 angekoppelt, welche an ihrem Ausgang 18 ein Ausgangssignal bereitstellt.

Im oberen Teil von Figur 2 ist z.B. das Signal auf den ab-Leitungen während eines Rufs durch die Vermittlung dargestellt. In diesem Fall hat die Spannung $U_a$ auf der a-Leitung einen von der Spannung $U_b$ auf der b-Leitung unterschiedlichen Wert. Dies bedeutet, daß der Hörer der Fernsprecheinrichtung noch nicht abgehoben wurde und der Wechselspannung eine Gleichspannung überlagert ist. Diese auf den ab-Leitungen anliegenden Spannungen werden von dem Differenzverstärker 14 voneinander abgezogen und das Ergebnis dieser Operation wird der Auswerteschaltung 17 zugeführt. Der Differenzverstärker 14 ist so beschaltet, daß seine differenzielle Verstärkung

$$V_{diff} = \frac{R_{12}}{R_3}.$$

beträgt, wobei $R_{12}$ gleich dem Widerstand 12 bzw. 13 und $R_3$ gleich dem Widerstand 3 bzw. 4 ist. Die Gleichtaktverstärkung dese Differenzverstärkers 14 beträgt

$$V_{com} = \frac{R_{10}}{R_3 + R_{10}}$$

wobei $R_{10}$ gleich dem Widerstand 10 bzw. 11 und $R_3$ wiederum gleich dem Widerstand 3 bzw. 4 ist. Die differenzielle Verstärkung ist somit unabhängig vom Widerstand 10 bzw. 11.

Im Fall des Abhebens des Hörers wird $U_a$ ungefähr gleich groß $U_b$. Dadurch wird die differenzielle Ausgangsspannung des Differenzverstärkers 14 zu Null. Die nachgeschaltete Erkennungseinrichtung 17 gibt dann ein Signal an ihrem Ausgang 18 aus, welches anzeigt, daß der Hörer abgehoben wurde.

Durch Verzerrungen insbesondere Signalbegrenzungen können, wie im oberen Teil der Figur 2 dargestellt, die Spannungssignale $U_a$, $U_b$ im oberen und unteren Bereich gekappt werden. Dadurch entsteht wie in der mittleren Kurve dargestellt, im Bereich der Scheitelwerte der Spannungssignale $U_a$, $U_b$ eine Ausgangs-

## EP 0 669 747 B1

spannung des Differenzverstärkers 14 von Null. Im unteren Bereich der Figur 2 wäre ein diesem Signalverlauf zugehöriges Abhebeerkennungssignal in negativer Logik dargestellt. Die Schaltungsanordnung 17 wertet dieses Signal nun entsprechend seinem Signalverlauf aus.

Ist die Dauer x des Signalanteils mit dem logischen Pegel "0" kleiner der einer vorgebbaren Zeit, so handelt es sich lediglich um einen Störimpuls und die Anordnung 17 kann kein Abhebeerkennungssignal an ihrem Ausgang 18 ausgeben.

Ist die Dauer x des Signals mit dem logischen Pegel "0" größer einer bestimmten vorgebbaren Zeit, wie es im dargestellten Beispiel der Fall ist, so wurde der Hörer abgehoben und die Null-Signale des Differenzverstärkers 14 sind nicht aufgrund der Verzerrungen entstanden. Die Schwelle, bei der die Auswerteschaltung ein Abhebesignal erkennt, kann z.B. die Dauer einer halben Periode betragen. Die Auswerteschaltung weist Mittel auf, die die Zeitdauer des erfaßten Abhebesignals bzw. des erfaßten "nicht"-Abhebesignals mit der Schwelle vergleicht und ein entsprechendes Ausgangssignal am Ausgang 18 bereitstellt. Dabei ist es unerheblich, ob als Vergleichssignal das in FIG 2 dargestellte "0"-Signal von Hook oder das "1"-Signal von Hook verwendet wird. Im ersten Fall muß die Dauer größer und im zweiten Fall kleiner einer vorgebbaren Schwelle sein.

Auf diese Weise kann eine einfache störsichere Abhebeerkennung mit Niedervolttechnologie in einer integrierten Schaltungen erreicht werden.

### Patentansprüche

1. Integrierbare Schaltungsanordnung zur störsicheren Abhebeerkennung bei Fernsprecheinrichtungen mit:

   einer jeweils einer Zweidrahtleitung (a, b) nachgeschalteten Spannungsbegrenzungsschaltung (3, 6, 7; 4, 8, 9),
   einer Differenzverstärkeranordnung (10...14), deren Eingänge mit je einem Ausgang der Spannungsbegrenzungsschaltung (3, 6, 7; 4, 8, 9) verbunden sind,

   **gekennzeichnet durch**
   Mittel (17) zum Erkennen der Dauer, während der das von der Differenzverstärkeranordnung (10...14) erzeugte Signal gleich Null ist, die bei Überschreitung einer Zeitschwelle ein Ausgangssignal erzeugen, das das Abheben eines Hörers der Fernsprecheinrichtung anzeigt.

2. Integrierte Schaltung nach Anspruch 1, **dadurch gekennzeichnet,** **daß** die Spannungsbegrenzungschaltung aus einem Hochohmwiderstand (3, 4), der einerseits mit der Zweidrahtleitung und andererseits über eine erste Diode (6, 8) in Durchlaßrichtung mit einer Versorgungsspannungsklemme (5) und über eine zweite Diode (7, 9) in Sperrichtung mit Masse verbunden ist, besteht.

3. Schaltungsanordnung nach Anspruch 1 oder 2, **dadurch gekennzeichnet,** **daß** der invertierende Ausgang der Differenzverstärkeranordnung über einen Widerstand (12) mit ihrem nichtinvertierenden Eingang gekoppelt ist, der nichtinvertierende Ausgang der Differenzverstärkeranordnung über einen Widerstand (13) mit ihrem invertierenden Eingang gekoppelt ist und daß der invertierende und der nichtinvertierende Eingang über jeweils einen Widerstand (10, 11) mit Masse verbunden ist.

### Claims

1. Integratable circuit arrangement for noise-free off-hook detection in telephone facilities, having:

   a voltage-limiting circuit (3, 6, 7; 4, 8, 9) connected downstream of a respective two-wire line (a, b), a differential amplifier arrangement (10 ... 14) whose inputs are connected to a respective output of the voltage-limiting circuit (3, 6, 7; 4, 8, 9),

   **characterized by**
   means (17) for detecting the length of time for which the signal produced by the differential amplifier arrangement (10 ... 14) is equal to zero, which produce an output signal indicating that a receiver in the telephone facility is off-hook when a time threshold is exceeded.

2. Integrated circuit according to Claim 1, **characterized** **in that** the voltage-limiting circuit comprises a high-value resistor (3, 4) which is connected firstly to the two-wire line and secondly via a first, forward-biased diode (6, 8) to a supply voltage terminal (5) and via a second, reverse-biased diode (7, 9) to earth.

3. Circuit arrangement according to Claim 1 or 2, **characterized** **in that** the differential amplifier arrangement's inverting output is coupled to its non-inverting input via a resistor (12), the differential amplifier arrangement's non-inverting output is coupled to its inverting input via a resistor (13), and in that the inverting and non-inverting inputs are connected to earth via a respective resistor (10, 11).

**Revendications**

1.  Aménagement de circuit intégrable pour l'identification sans parasites d'un combiné décroché dans des installations téléphoniques, comprenant :

    un circuit de limitation de tension (3, 6, 7; 4, 8, 9) respectivement connecté en aval d'une ligne bifilaire (a, b),
    un aménagement amplificateur différentiel (10 ... 14), dont les entrées sont connectées respectivement à une sortie du circuit de limitation de tension (3, 6, 7; 4, 8, 9),

    **caractérisé par**
    des moyens (17) pour identifier la durée, pendant laquelle le signal produit par l'aménagement amplificateur différentiel (10 ... 14) est égal à zéro, qui produisent lors d'un dépassement d'un seuil temporel un signal de sortie qui indique le décrochage d'un combiné de l'installation téléphonique.

2.  Circuit intégré selon la revendication 1,
    **caractérisé en ce que**
    le circuit de limitation de tension est constitué d'une résistance fortement ohmique (3, 4), qui est connectée, d'une part, à la ligne bifilaire et, d'autre part, à une borne de tension d'alimentation (5) via une première diode (6, 8) dans le sens passant et à la masse via une seconde diode (7, 9) dans le sens bloquant.

3.  Aménagement de circuit selon la revendication 1 ou 2,
    **caractérisé en ce que**
    la sortie inversante de l'aménagement amplificateur différentiel est couplée via une résistance (12) avec son entrée non inversante, la sortie non inversante de l'aménagement amplificateur différentiel est couplée via une résistance (13) avec son entrée inversante et les entrées inversante et non inversante sont connectées à la masse via respectivement une résistance (10, 11).

FIG 1

FIG 2